# EUROPÄISCHE PATENTSCHRIFT

(11) **EP 2 974 587 B1**
(45) Veröffentlichungstag und Bekanntmachung des Hinweises auf die Patenterteilung: **20.03.2019**
(21) Anmeldenummer: 15002060.0
(22) Anmeldetag: 09.07.2015
(51) Int. Cl.: A01D 43/08, A01D 41/127

(54) **LANDWIRTSCHAFTLICHE ERNTEMASCHINE**
AGRICULTURAL HARVESTER
MOISSONNEUSE

(30) Priorität: 17.07.2014 DE 102014010586
(43) Veröffentlichungstag der Anmeldung: 20.01.2016
(73) Patentinhaber: Maschinenfabrik Bernard Krone GmbH, 48480 Spelle (DE)
(72) Erfinder: Kronsbein, Christoph-Frederik, 49328 Melle (DE); Martinez, Jaron, 49076 Osnabrück (DE); Schniederbruns, Bernd, 49835 Wietmarschen (DE); Berghaus, André, 48727 Billerbeck (DE)

(56) Entgegenhaltungen:
- EP-A1- 1 053 671
- EP-A1- 2 232 978
- EP-A1- 2 361 495
- EP-A2- 2 189 781
- DE-A1- 19 524 752

## Beschreibung

Die Erfindung betrifft eine landwirtschaftliche Erntemaschine zum Ernten von strukturbehaftetem Erntegut nach dem Oberbegriff des Patentanspruches 1. Solche Erntemaschinen sind aus der Praxis in einer Vielzahl bekannt und schließen beispielsweise selbstfahrende Feldhäcksler, Rund- und Quaderballenpressen als auch Selbstladewagen ein.

Alle diese Erntemaschinen werden dazu eingesetzt, halmförmiges oder stängelförmiges Erntegut vom Feld zu ernten und das Erntegut für eine Konservierung in einem Futterstock aufzubereiten. Dabei ist es für den Betreiber von besonderer Bedeutung, dass bei diesen Ernteprozessen die jeweiligen Durchsätze der Erntemaschinen mit einer hinreichenden Genauigkeit erfasst und festgehalten werden. Eine wesentliche Voraussetzung für die Ermittlung der Durchsätze von Erntemaschinen ist dabei die Kenntnis der Erntegutgeschwindigkeit während des Erntegutflusses.

Neben der exakten Durchsatzermittlung können genaue Messdaten über die Erntegutgeschwindigkeit von gehäckseltem Mais bei der Überladung von dem Feldhäcksler auf ein nebenher fahrendes Transportfahrzeug auch dazu eingesetzt werden, dass der Überladeprozess im Hinblick auf eine verbesserte Wurfweitenregelung oder auf eine verbesserte Ausladung des Transportfahrzeuges optimiert wird.

Aus der DE 195 24 752 A1 ist eine Vorrichtung zur Durchsatzermittlung in einer landwirtschaftlichen Erntemaschine bekannt geworden, bei der die Querschnittsgröße der Press- und Einzugsvorrichtung eines Feldhäckslers, sowie die Drehzahl der Presswalzen als Grundlage für eine Durchsatzermittlung angesehen wurden. Die Praxis hat jedoch gezeigt, dass aufgrund von einer ungleichmäßigen Befüllung des Bereiches zwischen den Presswalzen oder einem veränderlichen Schlupfverhalten zwischen den Presswalzen und dem noch unzerkleinerten Maisstängeln eine hinreichend genaue Bestimmung der Emtegutgeschwindigkeit und damit auch des Durchsatzes nicht erreichbar sind.

Die EP 1 053 671 A1 zeigt und beschreibt eine Messeinrichtung zur Messung von Inhaltsstoffen oder Eigenschaften von Erntegut, die an einer landwirtschaftlichen Erntemaschine in der Art eines Feldhäckslers angebracht ist. Diese Messeinrichtung umfasst dazu ein Lampengehäuse mit einer Lampe zur Beaufschlagung des Erntegutes mit einem breitbandigen Licht. Weiterhin weist die Messeinrichtung einen Sensor zur Erfassung des von dem Erntegut reflektierten Lichtes auf, so dass durch eine Auswertung der gemessenen Lichtspektren eine Bestimmung der Anteile bestimmter Inhaltsstoffe möglich ist.

Aufgabe der Erfindung ist es daher, eine landwirtschaftliche Erntemaschine anzugeben, bei der die bekannten Mängel nicht mehr auftreten.

Diese Aufgabe wird erfindungsgemäß durch die kennzeichnenden Merkmale des Patentanspruches 1 gelöst. Weitere vorteilhafte Ausgestaltungen der Erfindung gehen aus den Unteransprüchen hervor.

Erfindungsgemäß wird eine landwirtschaftliche Erntemaschine zum Ernten von strukturbehaftetem Erntegut vorgeschlagen, die mit einer Aufnahmevorrichtung zur Aufnahme des Erntegutes von einem Feld- oder Wiesenboden und einer Kanaleinrichtung zur Förderung des Erntegutes entlang eines, bei der Bearbeitung des Erntegutes zwischen der Aufnahme und der Abgabe durchlaufenen Weges versehen ist, sowie mit einer Einrichtung zur Messung der Durchflussgeschwindigkeit des durch die Erntemaschine hindurch fließenden Erntegutstromes und einer mit dieser verbundenen Erfassung- und Auswerteeinrichtung, wobei an der Kanaleinrichtung eine Messstelle angeordnet ist, welche zumindest zwei Messaufnehmer umfasst, die in Förderrichtung des Erntegutes gesehen, nacheinander von dem Erntegut passiert werden und in Bezug zur Förderrichtung des Erntegutes einen definierten Abstand zueinander aufweisen, wobei jeder Messaufnehmer der Messstelle an der Kanaleinrichtung dazu eingerichtet ist, das die Messstelle passierende Erntegut mit einem wellenförmigen Signal zu beaufschlagen, sowie den von dem Erntegut reflektierten Anteil des wellenförmigen Signals zu erfassen und der nachgeschalteten Erfassungs- und Auswerteeinrichtung zuzuführen und wobei die Erfassungs- und Auswerteeinrichtung dazu eingerichtet ist, die erfassten Messsignale der Messaufnehmer rechnergestützt in zeitlicher Hinsicht so zu verschieben, dass dabei eine Überprüfung der erfassten Messsignale erfolgt, die darauf gerichtet ist, einen Vergleich der Messsignale durchzuführen.

Diese Messaufnehmer sind erfindungsgemäß also dazu eingerichtet, das die Messstelle passierende Erntegut mit einem wellenförmigen Signal zu beaufschlagen, sowie den von dem Erntegut reflektierten Anteil des wellenförmigen Signals wieder einzufangen bzw. aufzunehmen. Eine nachgeschaltete Erfassungs- und Auswerteeinrichtung dient dem rechnergestützten Vergleich der Messsignale des ersten und des zweiten, in Förderrichtung hinter einander angeordneten Messaufnehmers. Bei diesem Vergleich der Messsignale erfolgt rechnergestützt eine zeitliche Verschiebung des Messsignals des ersten Messaufnehmers mit dem des zweiten Messaufnehmers mit dem Ziel, einen gewissen Grad einer Ähnlichkeit oder Gleichheit der Messsignale festzustellen. Liegt zumindest eine hohe Übereinstimmung der Messsignale des ersten und des zweiten Messaufnehmers vor, so kann die Zeitverschiebung zwischen dem Messsignal des ersten Messaufnehmers und des zweiten Messaufnehmers als ein Maß für die Fördergeschwindigkeit des Erntegutes in der Kanaleinrichtung angesehen werden. Diese rechnergestützte Überprüfung bzw. dieser rechnergestützte Vergleich der Messsignale des ersten und des zweiten Messaufnehmers bezeichnet man auch als Kreuzkorrelation.

Aufgrund des definierten Abstandes zwischen den beiden Messaufnehmern und der, bei der rechnergestützten Überprüfung der Messsignale des ersten und des zweiten Messaufnehmers ermittelten Zeitdifferenz ist es möglich, die Förder- oder Durchflussgeschwindigkeit von strukturbehaftetem Erntegut in einer Kanaleinrichtung einer landwirtschaftlichen Erntemaschine mit einer hinreichenden Genauigkeit rechnerisch zu bestimmen. Unter strukturbehaftetem Erntegut versteht der Fachmann Erntegut, das eine feste Konsistenz hat und in geschnittener (zerkleinerter) oder ungeschnittener Form in einem Förderkanal oder dgl. Kanaleinrichtung bewegt wird.

Wie bereits vorstehend ausgeführt, wird von den Messaufnehmern der Messstelle ein wellenförmiges Signal ausgesandt, mit dem dann die Oberfläche von zerkleinerten Erntegutpartikeln oder auch nicht zerkleinerte Erntegüter bestrahlt wird. Bei diesem wellenförmigen Signal kann es sich grundsätzlich um jede Art von elektromagnetischen Wellen handeln. Eine Anwendung von breitbandigem Licht ist jedoch ebenso denkbar wie ein Einsatz von Lichtwellen, deren Wellenlänge dem Bereich des nahen Infrarotspektrums zuzurechnen ist.

In vorteilhafter Weise eignet sich die der Erfindung zugrunde liegende Anordnung von in einem Abstand hintereinander angeordneten Messaufnehmern an einer Kanaleinrichtung zur Verwendung an jeglichen Erntemaschinen, bei denen bei der Durchführung des Erntevorganges das Erntegut eine Bewegung innerhalb einer Kanaleinrichtung erfährt. Dazu zählen selbstfahrende Feldhäcksler ebenso wie Ballenpressen mit rechteckigem oder rundem Ballenpressraum, die halmförmiges Erntegut vom Feld- oder Wiesenboden aufnehmen und dieses geschnitten oder ungeschnitten zu hochverdichteten Ballen zusammenpressen.

Die Erfindung wird im Folgenden anhand der Zeichnung eines Ausführungsbeispiels nach der Erfindung näher erläutert.
**Fig. 1** der Zeichnung zeigt eine schematische Seitenansicht einer landwirtschaftlichen Erntemaschine in der Art eines selbstfahrenden Feldhäckslers;
**Fig. 2** zeigt eine schematische, vergrößert dargestellte Ansicht eines Abschnittes der Kanaleinrichtung der Erntemaschine nach Fig. 1;

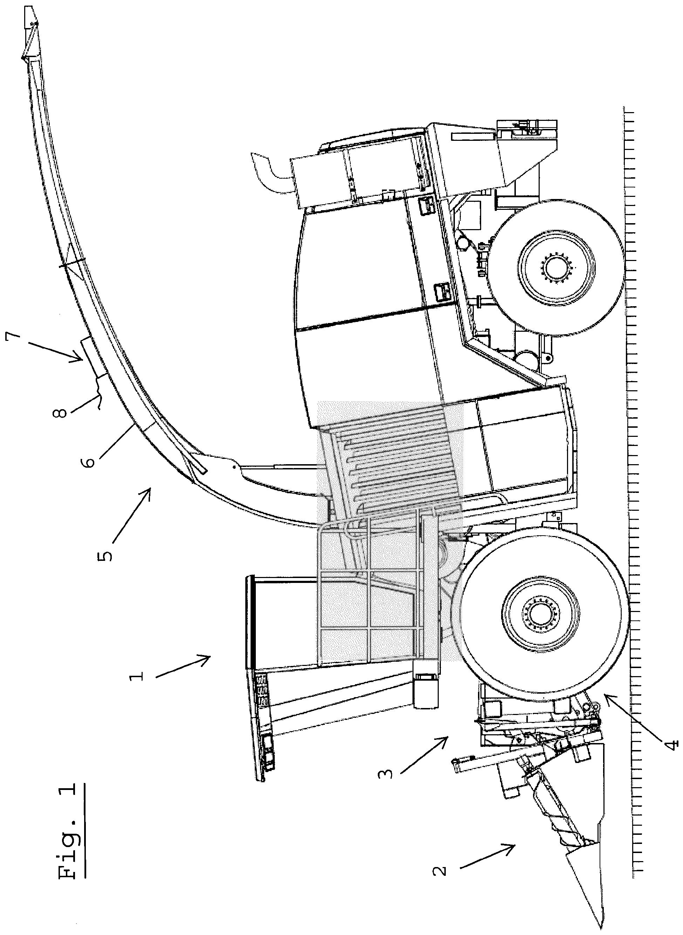

Eine vorteilhafte Ausführungsform der Erfindung ist in Fig. 1 näher veranschaulicht. Hier ist eine landwirtschaftliche Erntemaschine 1 in der Art eines selbstfahrenden Feldhäckslers gezeigt, die sowohl zum Ernten von stängelartigem Erntegut wie Mais, als auch zum Ernten von Gras oder dgl. Halmgüter geeignet ist. Versehen mit einer Aufnahmevorrichtung 2 nimmt die Erntemaschine das Erntegut vom Feld- oder Wiesenboden auf oder schneidet es in stehender Form von seinen Wurzeln ab. Zur Durchführung des weiteren Ernte- und Verarbeitungsvorganges durchläuft das Erntegut eine Einzugs- und Presseinrichtung 3 und eine Häckseleinrichtung 4, bevor es dann unter dem Einfluss eines Nachbeschleunigergebläses durch Kanaleinrichtungen 5 in der Art eines Auswurfbogens 6 auf ein nicht dargestelltes Transportfahrzeug übergeladen wird.

Gemäß der Erfindung ist die als Auswurfbogen 6 ausgebildete Kanaleinrichtung 5 der Erntemaschine 1 nun mit einer Messstelle 7 versehen, die an der Oberseite des Auswurfbogens 6 angebracht ist. Die Oberseite des Auswurfbogens 6 ist die Seite, an der das Erntegut gleitend entlang geführt wird, wenn es mit hoher Durchflussgeschwindigkeit durch den Auswurfbogen 6 gefördert wird. Mittels einer Kabelverbindung 8 ist die Messstelle 7 mit einer Erfassung- und Auswerteeinrichtung verbunden, welche einer bus-artig organisierten Steuerung der landwirtschaftlichen Erntemaschine zugehört.

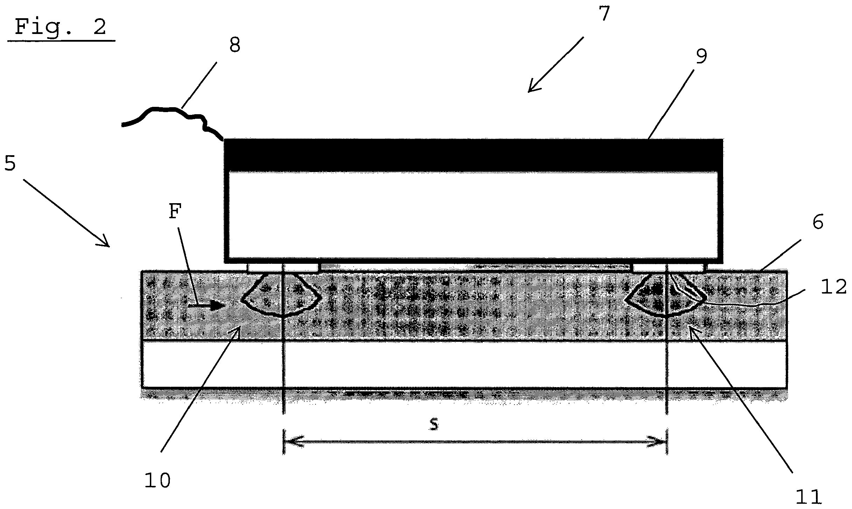

In der vergrößert dargestellten Ansicht der Fig. 2 ist die Messstelle 7 in detaillierter Form veranschaulicht. Auf der Oberseite des Auswurfbogens 6 ist die Messstelle 7 in einem Gehäuse 9 untergebracht und beispielsweise über nicht dargestellte Schraubverbindungen an dem Auswurfbogen 6 befestigt. Erfindungsgemäß besteht die Messstelle 7 aus zwei Messaufnehmer 10,11, die in Förderrichtung F in einem definierten Abstand S hinter einander angeordnet sind. Eine vorteilhafte Bemessung des Abstandes S liegt bei etwa 500 mm. Der Abstand S kann allerdings auch kleiner oder größer ausgeführt sein, wobei eine solche Veränderung des Abstandes bei der Festlegung der Abtastrate der Messaufnehmer 10,11 zu berücksichtigen ist. Wie bereits beschrieben, enthalten diese Messaufnehmer 10,11 je eine Sendeeinrichtung zum Senden/Ausstrahlen eines wellenförmigen Signals, mit dem die an der Oberseite des Auswurfbogens gleitend entlang geführten Erntegutpartikel beaufschlagt werden. Dazu weist die Oberseite des Auswurfbogens 6 für jeden Messaufnehmer 10,11 eine Öffnung 12 auf, die jedoch durch die Verwendung einer Glasscheibe oder dgl. durchsichtiges Bauteil den Durchgang des wellenförmigen Signals ermöglicht und gleichzeitig den Austritt des an der Oberseite des Auswurfbogens 6 entlang geführten Erntegutes verhindert. Weiterhin sind diese Messaufnehmer 10,11 mit je einer Empfängereinrichtung zum Erfassen und Aufnehmen des Anteils des wellenförmigen Signals ausgestattet, der von den an der Oberseite des Auswurfbogens 6 entlang geführten Erntegutpartikeln reflektiert wird. Die Anbringung der Messaufnehmer 10,11 im Abstand S bezweckt dabei, dass die an der Oberseite des Auswurfbogens 6 entlang geführten Erntegutpartikel zunächst von dem Messaufnehmer 10 mit dem wellenförmigen Signal beaufschlagt werden und dabei ein reflektiertes Messsignal hervorrufen. Da sich an dem Messaufnehmer 11 die gleiche Messfolge vollzieht, können von der nachgeschalteten Erfassungs- und Auswerteeinrichtung Messsignale erfasst und gespeichert werden, die sich in ihrem Signalverlauf ähneln oder gleichen. Diese Erkenntnis beruht darauf, dass bei der Förderung des Erntegutes durch den Auswurfbogen 6 das wellenförmige Signal der Sendeeinrichtung des Messaufnehmers 10 sowie das wellenförmige Signal der Sendeeinrichtung des Messaufnehmers 11 nacheinander auf das gleiche Erntegutteilchen trifft. Dadurch werden Messsignale erzeugt, die sich ähneln oder gleichen. Bei der nun von der Erfassungs- und Auswerteeinrichtung durchgeführten, rechnergestützten Überprüfung (Vergleich) der Messsignale der Messaufnehmer 10,11 wird ermittelt, ob diese Messsignale einander gleichen. Dabei erfasst die Erfassung- und Auswerteeinrichtung die Zeitdifferenz zwischen dem Messsignal des Messaufnehmers 10 und dem Messsignal des Messaufnehmers 11. Diese Zeitdifferenz stellt ein Maß für die in dem Auswurfbogen vorherrschende Förder- oder Durchflussgeschwindigkeit, in dem mittels der Beziehung aus dem konstanten Abstand S (Weg) dividiert durch die Zeitdifferenz zwischen den beiden Messsignalen rechnerisch die Förder- oder Durchflussgeschwindigkeit ermittelt werden kann. Diese rechnergestützte Überprüfung (Vergleich) der Messsignale wird auch als Kreuzkorrelation bezeichnet.

Bei der Auswahl eines vorteilhaften, wellenförmigen Signals kann der Fachmann auf zahlreiche Alternativen zurückgreifen, wobei jede Art von elektromagnetischer Welle eingesetzt werden kann. Daneben ist ebenso die Verwendung von Lichtwellen möglich, wobei das Spektrum vom breitbandigem (weißem) Licht bis in den Infrarotbereich führen kann. Für die Ausbildung bzw. Gestaltung der Sende- bzw. Empfängereinrichtungen der Messaufnehmer 10,11 stehen zahlreiche, standardmäßige, elektronische Bauteile oder Bauteilgruppen zur Verfügung, die dem Fachmann bekannt sind.

Obwohl in der Zeichnung und in der Beschreibung eine bevorzugte Ausführungsform beschrieben ist, so sind durchaus noch weitere Modifikationen möglich. Ohne den Rahmen der Erfindung zu verlassen, ist es ebenso denkbar, die Messstelle 7 an einer Kanaleinrichtung einer Ballenpresse oder eines Ladewagens anzubringen, um auch dort die Förder- oder Durchflussgeschwindigkeit des Erntegutes durch die Maschine feststellen zu können. Eine Verwendung an Erntemaschinen für Hackfrüchte ist erfindungsgemäß ebenfalls vorstellbar.

Da exakte Kenntnisse über die Förder- oder Durchflussgeschwindigkeit des Erntegutes innerhalb der Maschine von besonderer Bedeutung für eine optimale Nutzung bzw. Steuerung der Erntemaschine sind, ist es vorstellbar, dass diese Kenntnisse in zahlreiche Anwendungen einfließen können. Hier ist beispielsweise eine energieoptimierte Steuerung der Wurfweite des Erntegutes bei der Überladung vom Auswurfbogen 6 auf ein nebenher fahrendes Transportfahrzeug zu nennen. Weiterhin ist es denkbar, dass in Verbindung mit einer Messung der Schichtdicke des an der Oberseite des Auswurfbogens 6 entlang geführten Erntegutstromes und der Kenntnis der exakten Förder- oder Durchflussgeschwindigkeit eine genaue Ermittlung des Volumenstromes möglich ist. Steht dann auch noch eine Information über die Dichte des Erntegutes zur Verfügung, dann lässt sich auch der Durchsatz mit großer Genauigkeit feststellen bzw. errechnen.

## Patentansprüche

1. Landwirtschaftliche Erntemaschine zum Ernten von strukturbehaftetem Erntegut mit einer Aufnahmevorrichtung (2) zur Aufnahme des Erntegutes von einem Feld- oder Wiesenboden und einer Kanaleinrichtung (5) zur Förderung des Erntegutes entlang eines, bei der Bearbeitung des Erntegutes zwischen der Aufnahme und der Abgabe durchlaufenen Weges, mit einer Einrichtung zur Messung der Durchflussgeschwindigkeit des durch die Erntemaschine hindurch fließenden Erntegutstromes sowie einer mit dieser verbundenen Erfassung- und Auswerteeinrichtung, wobei an der Kanaleinrichtung (5) eine Messstelle (7) angeordnet ist, welche zumindest zwei Messaufnehmer (10,11) umfasst, die in Förderrichtung des Erntegutes gesehen, nacheinander von dem Erntegut passiert werden und in Bezug zur Förderrichtung (F) des Erntegutes einen definierten Abstand (S) zueinander aufweisen, und wobei jeder Messaufnehmer (10,11) der Messstelle (7) an der Kanaleinrichtung (5) dazu eingerichtet ist, das die Messstelle (7) passierende Erntegut mit einem wellenförmigen Signal zu beaufschlagen, sowie den von dem Erntegut reflektierten Anteil des wellenförmigen Signals zu erfassen und der nachgeschalteten Erfassungs- und Auswerteeinrichtung zuzuführen, **dadurch gekennzeichnet, dass** die Erfassungs- und Auswerteeinrichtung dazu eingerichtet ist, die erfassten Messsignale der Messaufnehmer (10,11) rechnergestützt in zeitlicher Hinsicht so zu verschieben, dass dabei eine Überprüfung der erfassten Messsignale erfolgt, die darauf gerichtet ist, einen Vergleich der Messsignale durchzuführen.

2. Landwirtschaftliche Erntemaschine nach Anspruch 1, **dadurch gekennzeichnet, dass** es sich bei dem wellenförmigen Signal um eine elektromagnetische Welle mit beliebiger Frequenz handelt.

3. Landwirtschaftliche Erntemaschine nach Anspruch 1, **dadurch gekennzeichnet, dass** das die Messstelle (7) passierende Erntegut mit breitbandigem Licht als wellenförmiges Signal beaufschlagt wird.

4. Landwirtschaftliche Erntemaschine nach Anspruch 1, **dadurch gekennzeichnet, dass** das wellenförmige Signal aus Lichtwellen gebildet ist, die hinsichtlich ihrer Wellenlänge dem nahen Infrarotspektrum zuzurechnen sind.

5. Landwirtschaftliche Erntemaschine nach Anspruch 1, **dadurch gekennzeichnet, dass** das das Ergebnis der rechnergestützten Überprüfung der erfassten Messsignale auf einer Kreuzkorrelation beruht.

6. Landwirtschaftliche Erntemaschine nach Anspruch 1, **dadurch gekennzeichnet, dass** die bei der rechnergestützten Überprüfung der erfassten Messsignale ermittelte Zeitdifferenz ein Maß für die Geschwindigkeit des Erntegutes in der Kanaleinrichtung (5) darstellt.

7. Landwirtschaftliche Erntemaschine nach zumindest einem der Ansprüche 1 bis 6, **dadurch gekennzeichnet, dass** die Kanaleinrichtung (5) zur Förderung des Erntegutes ein Auswurfbogen (6) eines selbstfahrenden Feldhäckslers ist.

8. Landwirtschaftliche Erntemaschine nach zumindest einem der Ansprüche 1 bis 7, **dadurch gekennzeichnet, dass** die Kanaleinrichtung (5) zur Förderung des Erntegutes ein Förder- und Schneidkanal einer Ballenpresse oder eines Ladewagens ist.

## Claims

1. Agricultural harvester for harvesting structured crops, comprising a pick-up device (2) for collecting the crops from a field or a meadow, and a channel means (5) for conveying the crops along a path which goes through pick-up and discharge during processing of the crops, comprising a means for measuring the flow speed of the crops flowing through the harvester, as well as a detection and analysis means connected thereto, a measurement point (7) being arranged on the channel means (5) and comprising at least two measurement sensors (10, 11) which, when viewed in the conveying direction of the crops, are passed successively by the crops and are at a set distance (S) from one another with respect to the conveying direction (F) of the crops, and each measurement sensor (10, 11) of the measurement point (7) on the channel means (5) being designed to apply a waveform signal to the crops passing the measurement point (7) and to detect the portion of the waveform signal that is reflected by the crops and supply it to the detection and analysis means arranged downstream, **characterised in that**, assisted by a computer, the detection and analysis means is designed to temporally shift the detected measurement signals from the measurement sensors (10, 11) such that the detected measurement signals undergo a verification which is aimed at comparing the measurement signals.

2. Agricultural harvester according to claim 1, **characterised in that** the waveform signal is an electromagnetic wave having any desired frequency.

3. Agricultural harvester according to claim 1, **characterised in that** the crops passing the measurement point (7) are subjected to broadband light as the waveform signal.

4. Agricultural harvester according to claim 1, **characterised in that** the waveform signal is made up of light waves of which the wavelength can be allocated to the near-infrared spectrum.

5. Agricultural harvester according to claim 1, **characterised in that** the result of the computer-assisted verification of the detected measurement signals is based on a cross-correlation.

6. Agricultural harvester according to claim 1, **characterised in that** the time difference determined during the computer-assisted verification of the detected measurement signals represents a measure for the speed of the crops in the channel means (5).

7. Agricultural harvester according to at least one of claims 1 to 6, **characterised in that** the channel means (5) for conveying the crops is a discharge spout (6) of a self-propelled field chopper.

8. Agricultural harvester according to at least one of claims 1 to 7, **characterised in that** the channel means (5) for conveying the crops is a conveying and cutting channel of a baler or of a self-loading forage wagon.

## Revendications

1. Moissonneuse agricole destinée à la moisson de produits agricoles structurés comprenant un dispositif de réception (2) permettant de recevoir les produits agricoles provenant du sol d'un champ ou d'une prairie et un dispositif de canalisation (5) permettant de convoyer les produits agricoles le long d'un trajet s'étendant lors du traitement de ces produits agricoles, entre leur entrée et leur sortie comprenant un dispositif de mesure de la vitesse de passage du flux de produits agricoles passant dans la moissonneuse ainsi qu'un dispositif de détection et d'évaluation relié à celui-ci, sur le dispositif de canalisation (5) étant monté un emplacement de mesure (7) qui comprend au moins deux capteurs de mesure (10, 11) qui sont traversés l'un après l'autre par les produits agricoles dans leur direction de convoyage (2, 7), et sont situés à une distance (S) définie par rapport à la direction de convoyage (F) de ces produits agricoles, chaque capteur de mesure (10, 11) de l'emplacement de mesure (7) étant réalisé sur le dispositif de canalisation (5) de façon à transmettre aux produits agricoles passant dans l'emplacement de mesure (7) un signal en forme d'onde, et à détecter la partie du signal en forme d'onde réfléchie par les produits agricoles et le transmettre au dispositif de détection et d'évaluation situé à l'arrière,
**caractérisée en ce que**
le dispositif de détection et d'évaluation est réalisé pour permettre de décaler chronologiquement de façon assistée par calculateur les signaux de mesure détectés des capteurs de mesure (10, 11) de façon à permettre ainsi une vérification des signaux de mesure détectés permettant d'effectuer une comparaison de ces signaux de mesure.

2. Moissonneuse agricole conforme à la revendication 1,
**caractérisée en ce que**
le signal en forme d'onde est constitué par une onde électromagnétique de fréquence quelconque.

3. Moissonneuse agricole conforme à la revendication 1,
**caractérisée en ce que**
les produits agricoles passant dans l'emplacement de mesure (7) reçoivent de la lumière à large bande en tant que signal en forme d'onde.

4. Moissonneuse agricole conforme à la revendication 1,
**caractérisée en ce que**
le signal en forme d'onde est formé par des ondes lumineuses dont la longueur d'onde est située dans le spectre infrarouge proche.

5. Moissonneuse agricole conforme à la revendication 1,
**caractérisée en ce que**
le résultat de la vérification assistée par calculateur des signaux de mesure détectés correspond à une corrélation croisée.

6. Moissonneuse agricole conforme à la revendication 1,
**caractérisée en ce que**
la différence de temps déterminée lors de la vérification assistée par calculateur entre les signaux de mesure détectés correspond à une mesure de la vitesse des produits agricoles dans le dispositif de canalisation (5).

7. Moissonneuse agricole conforme à au moins l'une des revendications 1 à 6,
**caractérisée en ce que**
le dispositif de canalisation (5) permettant de convoyer les produits agricoles est un arc d'éjection (6) d'une faucheuse-hacheuse agricole autotractée.

8. Moissonneuse agricole conforme à au moins l'une des revendications 1 à 7,
**caractérisée en ce que**
le dispositif de canalisation (5) permettant de convoyer les produits agricoles est un canal de convoyage et de coupe d'une presse à balles ou d'un véhicule de charge.
